(19) Europäisches Patentamt / European Patent Office / Office européen des brevets

(11) **EP 1 668 890 B1**

(12) **EUROPEAN PATENT SPECIFICATION**

(45) Date of publication and mention
of the grant of the patent:
**14.01.2015 Bulletin 2015/03**

(51) Int Cl.:
*H04N 5/21* (2006.01)          *G06T 5/00* (2006.01)
*G06T 5/10* (2006.01)

(21) Application number: **04788488.7**

(22) Date of filing: **22.09.2004**

(86) International application number:
**PCT/KR2004/002428**

(87) International publication number:
**WO 2005/032122 (07.04.2005 Gazette 2005/14)**

(54) **DENOISING METHOD AND APPARATUS**

ENTRAUSCHUNGSVERFAHREN UND -VORRICHTUNG

PROCEDE ET APPAREIL DE DEBRUITAGE

(84) Designated Contracting States:
**AT BE BG CH CY CZ DE DK EE ES FI FR GB GR
HU IE IT LI LU MC NL PL PT RO SE SI SK TR**

(30) Priority: **29.09.2003 KR 2003067435**

(43) Date of publication of application:
**14.06.2006 Bulletin 2006/24**

(73) Proprietor: **Samsung Electronics Co., Ltd.
Suwon-si, Gyeonggi-do, 443-742 (KR)**

(72) Inventor: **PARK, Chan-Sik
Suwon-si,
Gyeonggi-do 443-809 (KR)**

(74) Representative: **Bray, Richard Anthony et al
Appleyard Lees
15 Clare Road
Halifax HX1 2HY (GB)**

(56) References cited:
EP-A2- 1 074 940          JP-A- 2002 216 126
JP-A- 2003 204 436        US-A1- 2004 008 904

• JIN E ET AL: "Adaptive wiener filtering of noisy images and image sequences", PROCEEDINGS 2003 INTERNATIONAL CONFERENCE ON IMAGE PROCESSING (CAT. NO.03CH37429), BARCELONA, SPAIN, 14-17 SEPT. 2003; [INTERNATIONAL CONFERENCE ON IMAGE PROCESSING], IEEE, IEEE PISCATAWAY, NJ, USA, vol. 3, 14 September 2003 (2003-09-14), pages 349-352, XP010670082, ISBN: 978-0-7803-7750-9
• JANSEN MAARTEN ET AL: "Image de-noising by integer wavelet transforms and generalized cross validation", MEDICAL PHYSICS, AIP, MELVILLE, NY, US, vol. 26, no. 4, 1 April 1999 (1999-04-01), pages 622-630, XP012010758, ISSN: 0094-2405, DOI: 10.1118/1.598562
• BRUNI V ET AL: "A Wiener filter improvement combining wavelet domains", IMAGE ANALYSIS AND PROCESSING, 2003.PROCEEDINGS. 12TH INTERNATIONAL CO NFERENCE ON SEPT. 17-19, 2003, PISCATAWAY, NJ, USA,IEEE, 17 September 2003 (2003-09-17), pages 518-523, XP010659445, ISBN: 978-0-7695-1948-7

**Description**

Technical Field

The present invention relates to denoising of an image, and more particularly, to a denoising method and apparatus, which denoise an image by using a combination of linear and non-linear wavelet thresholding methods.

Background Art

Various noise can be inserted into images, and most of the various noise is white Gaussian noise. White Gaussian noise is noise that spreads across nearly all frequency bands on a spectrum. Recently, various denoising methods for removing white Gaussian noise have been developed.

One of the various denoising methods is a wavelet transform-based denoising method. Wavelet transform, like Fourier transform, divides and transforms an image signal into a set of base functions. When an image is divided into blocks through wavelet transform, the blocks have spatial components as well as frequency components and are clearly differentiated from one another depending on their respective frequency bands. In the wavelet transform, white Gaussian noise can be removed from an image by using, for example, a thresholding method. In the thresholding method, a threshold is set, and the image is denoised based on whether wavelet coefficients of blocks of the image are higher than the threshold. However, the thresholding method may result in loss of edge portions of the image, thus degrading the quality of the image.

There is another denoising method, i.e., locally adaptive window-based denoising method using a maximum likelihood estimator (LAWML). Here, the maximum likelihood estimator is one type of Wiener filter. In the LAWML, however, there is a possibility of wavelet noise being accidentally inserted into an output image. There is still another denoising method, i.e., a wavelet transform-based Weiner filtering method. The wavelet transform-based Weiner filtering method, like the thresholding method, may result in loss of edge portions of an image because it uses a threshold to calculate a local variance.

Examples of the art may be found in, for instance:

JIN E ET AL: "Adaptive wiener filtering of noisy images and image sequences", PROCEEDINGS 2003 INTERNATIONAL CONFERENCE ON IMAGE PROCESSING (CAT. NO.03CH37429), BARCELONA, SPAIN, 14-17 SEPT. 2003; [INTERNATIONAL CONFERENCE ON IMAGE PROCESSING], IEEE, IEEE_PISCATAWAY, NJ, USA, vol. 3, 14 September 2003 (2003-09-14), pages 349-352, XP010670082, ISBN: 978-0-7803-7750-9; and

JANSEN MAARTEN ET AL: "Image de-noising by integer wavelet transforms and generalized cross validation", MEDICAL PHYSICS, AIP, MELVILLE, NY, US, vol. 26, no. 4, 1 April 1999 (1999-04-01), pages 622-630, XP012010758, ISSN: 0094-2405, DOI: 10.1118/1.598562.

Technical Solution

The present invention (as defined by the claims) provides a denoising method and apparatus, which denoise an image with white Gaussian noise in two steps, i.e., a primary step associated with denoising in a spatial domain and a secondary step associated with denoising in a wavelet domain.

Advantageous Effects

The denoising method according to the present invention can remove noise from an image while maintaining an image signal in a low frequency band by performing pre-treatment on the image in a spatial domain and applying different thresholding methods to blocks of the image depending on the division level of the image. In addition, it is possible to render edge portions of the image more natural than in the prior art.

Description of Drawings

The above and other features and advantages of the present invention will become more apparent by describing in detail exemplary embodiments thereof with reference to the attached drawings in which:

FIG. 1 is a flowchart of a denoising method according to an exemplary embodiment of the present invention;
FIG. 2 is a diagram illustrating an image which is divided into blocks through wavelet transform;
FIG. 3 is a detailed flowchart of a process of obtaining a noise level of an image;

FIG. 4 is a diagram illustrating a method of processing edge portions of an image in operation S120 of FIG. 1;

FIG. 5 is a detailed flowchart of secondary denoising operations of the denoising method of FIG. 1;

FIG. 6A is a diagram illustrating the variation of an input image value, which results from a hard thresholding method that is one of non-linear thresholding methods;

FIG. 6B is a diagram illustrating the variation of an input image value, which results from a soft thresholding method that is one of linear critical methods;

FIG. 7 is a block diagram of a denoising apparatus according to an exemplary embodiment of the present invention;

FIG. 8 is a detailed block diagram of a first denoiser of FIG. 7; and

FIG. 9 is a detailed block diagram of a second denoiser of FIG. 7.

Best Mode

According to an aspect of the present invention, there is provided a denoising method including (a) primarily denoising an input image in a spatial domain; and (b) dividing the input image into blocks by performing wavelet transform on the primarily denoised input image and then secondarily denoising the divided input image by applying different thresholds to the divided input image depending on the division level of the divided input image.

(a) may include (a1) calculating the level of noise included in the input image; and (a2) performing pixel-wise Wiener (PWW) filtering on the input image by using the noise level calculated in (a1).

(a1) may include (a11) dividing the input image into blocks with a division level of 1 by performing wavelet transform; (a12) dividing some of the blocks of the input image whose horizontal and vertical components are all high frequency components into sub-blocks; (a13) calculating an average of wavelet coefficients of the sub-blocks; and (a14) determining some of the sub-blocks having a wavelet coefficient of about 0 as sub-blocks where only noise exists and calculating the noise level by obtaining a square root of an average of variances of the corresponding sub-blocks where only noise exists.

Each of the sub-blocks may have an 8x8 size or a $16 \times 16$ size.

In (a2), a noise variance may be calculated by using the noise level calculated in (a1), and a local mean and a local variance in an edge portion of each of the sub-blocks may be calculated by horizontally and vertically mirroring the wavelet coefficients of each of the sub-blocks if no wavelet coefficients exist in the edge portion of each of the sub-blocks.

(b) may includes (b1) dividing the primarily denoised input image with a division level of N by performing waveform transform; and (b2) secondarily denoising the divided input image by applying different thresholds to the divided input image depending on the division level of the divided input image.

In (b2), if sub-blocks are not larger than round(N/2), and the absolute values of wavelet coefficients of sub-blocks are smaller than a reference value for a predetermined level, the wavelet coefficients of the sub-blocks are set to a value of 0, and if the sub-blocks are not larger than round(N/2), but the absolute values of the wavelet coefficients of the sub-blocks are not smaller than the reference value for the predetermined level, results of subtracting the reference value from the absolute values of the wavelet coefficients of the sub-blocks are output with signs of the wavelet coefficients of the sub-blocks kept intact.

In (b2), if some of the sub-blocks which are larger than round(N/2), their wavelet coefficients are output.

The reference value may be calculated based on a median value, which is obtained by detecting a maximum among wavelet coefficients of sub-blocks in each of a plurality of rows, which are high frequency components, and then averaging maximum wavelet coefficients respectively detected from the plurality of rows in consideration that the input image has already been primarily denoised through PWW filtering.

According to another aspect of the present invention, there is provided a denoising method including (a) dividing an input image into blocks with a division level of 1 by performing wavelet transform; (b) dividing some of the blocks of the input image whose horizontal and vertical components are all high frequency components into sub-blocks; (c) calculating an average of wavelet coefficients of the sub-blocks; (d) determining some of the sub-blocks having a wavelet coefficient of about 0 as sub-blocks where only noise exists and calculating a noise level by obtaining a square root of an average of variances of the corresponding sub-blocks where only noise exists; and (e) performing PWW filtering by using the noise level calculated in (d).

In (e), a noise variance may be calculated by using the noise level calculated in (d), and a local mean and a local variance in an edge portion of each of the sub-blocks may be calculated by horizontally and vertically mirroring the wavelet coefficients of each of the sub-blocks if no wavelet coefficients exist in the edge portion of each of the sub-blocks.

According to another aspect of the present invention, there is provided a denoising apparatus including a first denoising unit, which primarily denoises an input image in a spatial domain; a wavelet transform unit, which divides the input image into blocks by performing wavelet transform on the primarily denoised input image; and a second denoising unit, which secondarily denoises the divided input image by applying different thresholds to the divided input image depending on the division level of the divided input image.

The denoising apparatus may further include an inverse wavelet transform unit, which performs inverse wavelet transform on the secondarily denoised input image.

The first denoising unit may include a noise level calculator, which calculates the level of noise included in the input image; and a PWW filtering performer, which performs pixel-wise Wiener (PWW) filtering on the input image by using the noise level calculated by the noise level calculator.

The noise level calculator may include a wavelet divider, which divides the input image into blocks by performing wavelet transform on the input image with a division level of 1; a sub-block divider, which divides some of the blocks of the input image whose horizontal and vertical components are all high frequency components into sub-blocks; an average calculator, which calculates an average of wavelet coefficients of the sub-blocks; and a determiner/calculator, which determines some of the sub-blocks having a wavelet coefficient of about 0 as sub-blocks where only noise exists and calculates the noise level by obtaining a square root of an average of variances of the corresponding sub-blocks where only noise exists.

The PWW filtering performer may calculate a noise variance by using the noise level and calculates a local mean and a local variance in an edge portion of each of the sub-blocks by horizontally and vertically mirroring the wavelet coefficients of each of the sub-blocks if no wavelet coefficients exist in the edge portion of each of the sub-blocks.

If sub-blocks are not larger than round(N/2), and the absolute values of wavelet coefficients of sub-blocks are smaller than a reference value for a predetermined level, then the second denoising unit sets the wavelet coefficients of the sub-blocks, and if the sub-blocks are not larger than round(N/2), but the absolute values of the wavelet coefficients of the sub-blocks are not smaller than the reference value for the predetermined level, then the second denoising unit outputs results of subtracting the reference value from the absolute values of the wavelet coefficients of the sub-blocks with signs of the wavelet coefficients of the sub-blocks kept intact.

If some of the sub-blocks which are larger than round(N/2), the second denoising unit output their wavelet coefficients.

The reference value may be calculated based on a median value, which is obtained by detecting a maximum among wavelet coefficients of sub-blocks in each of a plurality of rows, which are high frequency components, and then averaging maximum wavelet coefficients respectively detected from the plurality of rows in consideration that the input image has already been primarily denoised through PWW filtering.

According to another aspect of the present invention, there is provided a denoising apparatus including a wavelet division unit, which divides an input image into blocks with a division level of 1 by performing wavelet transform; a sub-block division unit, which divides some of the blocks of the input image whose horizontal and vertical components are all high frequency components into sub-blocks; an average calculator, which calculates an average of wavelet coefficients of the sub-blocks; and a determination and calculation unit, which determines some of the sub-blocks having a wavelet coefficient of about 0 as sub-blocks where only noise exists and calculates a noise level by obtaining a square root of an average of variances of the corresponding sub-blocks where only noise exists.

The denoising apparatus may further include an inverse wavelet transform unit, which performs inverse wavelet transform on the secondarily denoised input image

The PWW filtering performer may calculate a noise variance by using the noise level and calculates a local mean and a local variance in an edge portion of each of the sub-blocks by horizontally and vertically mirroring the wavelet coefficients of each of the sub-blocks if no wavelet coefficients exist in the edge portion of each of the sub-blocks.

According to another aspect of the present invention, there is provided a computer-readable recording medium, on which a program enabling the denoising method is recorded.

Mode for Invention

Reference will now be made in detail to the embodiments of the present invention, examples of which are illustrated in the accompanying drawings, wherein like reference numerals refer to the like elements throughout. The embodiments are described below to explain the present invention by referring to the figures.

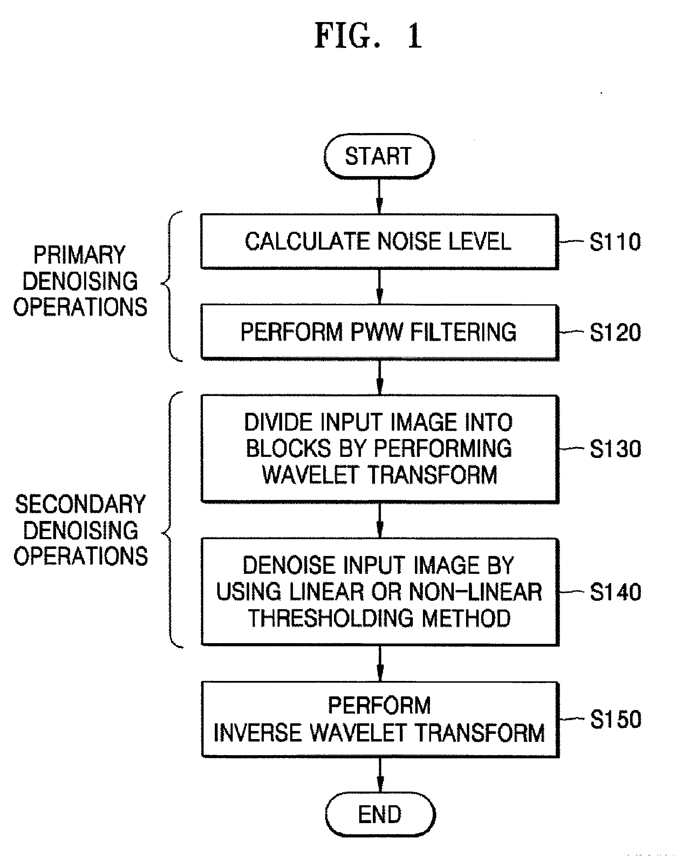

FIG. 1 is a flowchart of a denoising method according to an exemplary embodiment of the present invention. The denoising method is broadly divided into two steps, i.e., a first denoising step which is a denoising process performed before wavelet transform as pre-processes and a second denoising step which is a denoising process performed during the wavelet transform. The first and second denoising steps of the denoising method will now be described in further detail.

In operation S110, when an image having noise is received, a noise level of the image is obtained. The noise level denotes a standard deviation of the noise contained in the image. Thereafter, in operation S120, a pixel-wise Wiener filtering process is performed by using the noise level obtained in operation S110. The first denoising step of the denoising method comprises operations S110 and S120. By performing operations S110 and S120, white Gaussian noise is completely removed from the image such that only colored noise remains on a spectrum of the image.

Thereafter, the second denoising step of the denoising method is performed in order to remove the colored noise remaining in the image. In operation S130, the image is divided into blocks by performing wavelet transform thereon. In operation S140, noise components are removed from the image by using a linear or non-linear thresholding method. In operation S150, the image, from which the noise components have been removed, is restored by performing inverse wavelet transform thereon. Each of operations S110, S120, S130, S140, and S150 of the denoising method will now be described in greater detail.

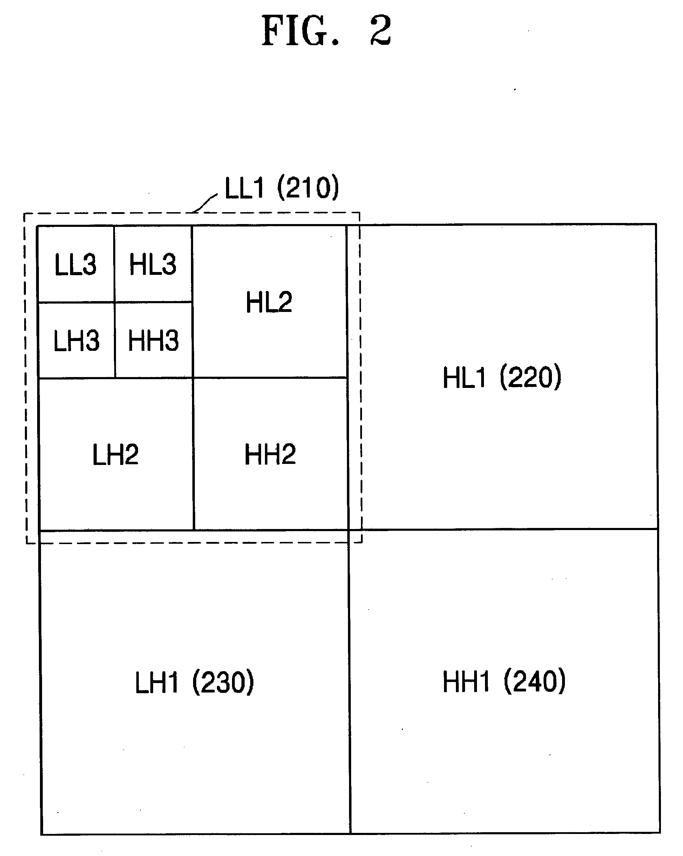

FIG. 2 is a diagram illustrating an image which is divided into blocks through wavelet transform. Referring to FIG. 2, the blocks of the image are differentiated from one another based on their respective frequency bands. Each of the blocks of the image has spatial components as well as frequency components. The image can be divided several times, and the number of times the image is divided is referred to as a division level. When the image is divided once, a block 210 (LL1) whose vertical and horizontal components are all low frequency components, a block 220 (HL1) whose vertical and horizontal components are a low frequency component and a high frequency component, respectively, a block 230 (LH1) whose vertical and horizontal components are a high frequency component and a low frequency component, respectively, and a block 240 (HH1) whose vertical and horizontal components are all high frequency components, are obtained. When the image is divided once again, the block 210 (LL1) is divided into blocks LL2, HL2, LH2, and HH2. When the image is divided once again, the block LL2 is divided into blocks LL3, HL3, LH3, and HH3. The image can be divided an indefinite number of times. This type of division is called octave division.

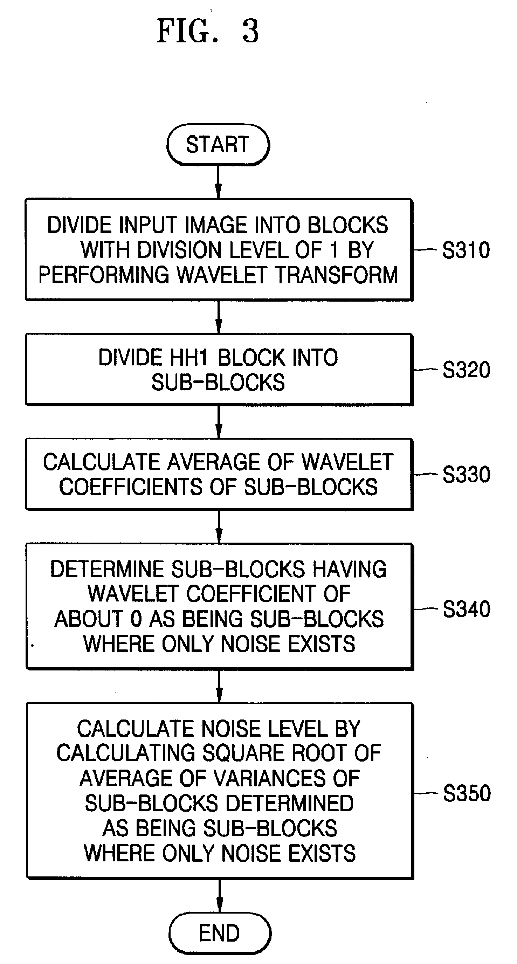

FIG. 3 is a detailed flowchart of a process of obtaining a noise level of an image. Referring to FIG. 3, in operation S310, an image is divided with a division level of 1 by performing wavelet transform. Accordingly, as shown in FIG. 2, the image is divided into four blocks, i.e., LL1 210, HL1 220, LH1 230, and HH1 240, which are differentiated from each other based on their respective frequency bands. Since noise contained in an image mostly exists in a high frequency band, a noise level of the image can be obtained by using the block 240 (HH1). Therefore, the block 240 (HH1) is divided into sub-blocks in operation S320. The size of the sub-blocks may be arbitrarily determined. For example, if the image has a 256x256 size, each of the sub-blocks of the block 240 (HH1) may have an 8x8 size. If the image has a 512x512 size, each of the sub-blocks of the block 240 (HH1) may have a 16x16 size. Each of the sub-blocks of the block 240 (HH1) may be one of a sub-block where only noise exists, a sub-block where original image data, which is noiseless, exists, and a sub-block where the original image data and noise coexist. Therefore, in operation S330, wavelet coefficients of the sub-blocks of the block 240 (HH1) are averaged in order to determine whether each of the sub-blocks is a sub-block where only noise exists, a sub-block where original image data exists, or a sub-block where the original image data and noise coexist.

In operation S340, if the absolute value of the wavelet coefficient average obtained in the operation S330 is very close to 0, the sub-blocks of the block 240 (HH1) are determined to be sub-blocks where only noise exists. For example, if the absolute value of the wavelet coefficient average obtained in operation S330 is not larger than 0.2, the sub-blocks of the block 240 (HH1) may be determined to be sub-blocks where only noise exists. A reference value is a value to be compared to the wavelet coefficient average of the sub-blocks of the block 240 (HH1) for determining whether the sub-blocks are sub-blocks where only noise exists, sub-blocks where original image data exists, or sub-blocks where the original image data and noise coexist. The reference value may be determined by taking advantage of the fact that the average of white Gaussian noise is 0 and wavelet transform has linear characteristics. In operation S350, a noise level is calculated by calculating a square root of an average of variances of the sub-blocks of the block 240 (HH1), which are determined to be sub-blocks where only noise exists.

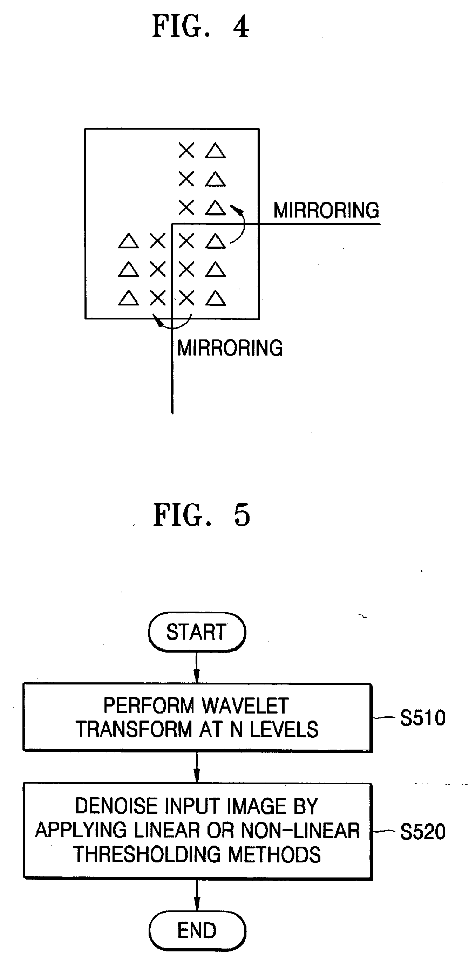

FIG. 4 is a diagram illustrating a method of processing of edge portions of an image in an operation S120 of FIG. 1. Referring to FIG. 4, in operation S120 of FIG. 1, a local mean $\mu$ and a local variance $\sigma_1^2$ are obtained by mirroring values of pixels in an edge portion of the image depending on the size of a local block where they belong, and then noise variance is calculated by using the noise level calculated in operation S350 of FIG. 3. The local mean $\mu$ and the local variance $\sigma_1^2$ are calculated by using Equations (1) below:

$$\mu = \frac{1}{MN} \sum y(i, j) \qquad \cdots (1)$$

$$\sigma_1^2 = \frac{1}{MN} \sum y^2(i, j) - \mu^2$$

where *MN* denotes the size of the local block, and *y* denotes an input image value.

An output image value $y_p$, which is obtained by performing PWW filtering on the input image value *y*, can be calculated by using Equations (2) below:

$$y_p(i, j) = \mu + \frac{\sigma_l^2 - \sigma_n^2}{\sigma_l^2}(y(i, j) - \mu) \qquad \cdots (2)$$

$$y_p(i, j) = \mu + \frac{\max(0, \sigma_l^2 - \sigma_n^2)}{\max(\sigma_l^2, \sigma_n^2)}(y(i, j) - \mu)$$

where $\sigma_n$ denotes the noise level obtained in operation S350 of FIG. 3.

FIG. 5 is a detailed flowchart of secondary denoising operations of the denoising method of FIG. 1. Referring to FIG. 5, as a result of PWW filtering, average noise is maintained at a predetermined level, but power spectral density shows that noise still remaining in the image is not white Gaussian noise but colored noise. Therefore, noise components, which still remain in the image, should be removed by applying either a linear thresholding method or a non-linear thresholding method depending on the division level of the image. More specifically, the image is divided with a division level of N in operation S510. Here, N may be determined depending on the size of the image. For example, if the image has a 256×256 size, N may be set to 4. If the image has a 512×512 size, N may be set to 5. Thereafter, in operation S520, the image, which is divided into blocks, is denoised by using a linear thresholding method or a non-linear thresholding method. More specifically, the non-linear thresholding method is applied to blocks of the image, which are not larger than round(N/2), and the linear thresholding method is applied to the rest of the image.

A threshold value t at a division level of N is calculated by using Equation (3) below:

$$t = \gamma \cdot \sigma \cdot \sqrt{2 \log n / n} \qquad \cdots (3)$$

where $\sigma$ denotes a noise level, and $\gamma$ denotes a median value, which is obtained by detecting a maximum among wavelet coefficient averages of only high-frequency blocks of the image in each of a plurality of rows of the image and then averaging such maximums respectively detected from the plurality of rows of the image in consideration that the image has already been denoised through PWW filtering.

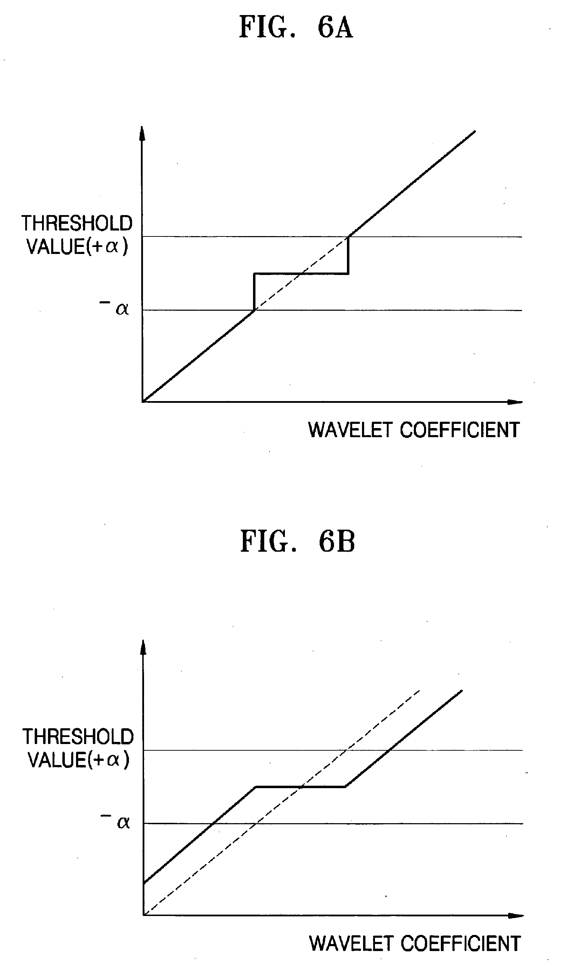

The non-linear thresholding method is classified into a hard thresholding method and a soft thresholding method, which will now be described more fully with reference to FIGS. 6A and 6B. The linear thresholding method is a method in which only input values that are higher than a predetermined division level are output without setting a threshold value. The predetermined frequency level is considered a low frequency level.

FIG. 6A is a diagram illustrating the variation of an input image value with respect to a wavelet coefficient, which is obtained by using the hard thresholding method. Referring to FIG. 6A, in the hard thresholding method, a predetermined value is set as a threshold value. Thereafter, input image values which are lower than the threshold value are determined as being noise and thus are set to a value of 0. Other input image values which are not lower than the threshold value are output just as they are.

FIG. 6B is a diagram illustrating the variation of an input image value with respect to the wavelet coefficient, which is obtained by using the soft thresholding method. Referring to FIG. 6B, in the soft thresholding method, like in the hard thresholding method, input image values which are lower than the threshold values are set to a value of 0 because they are considered as noise. However, in the soft thresholding method, unlike in the hard thresholding method, other input image values which are not lower than the threshold value are not output just as they are but output as differences between the threshold value and their respective wavelet coefficients.

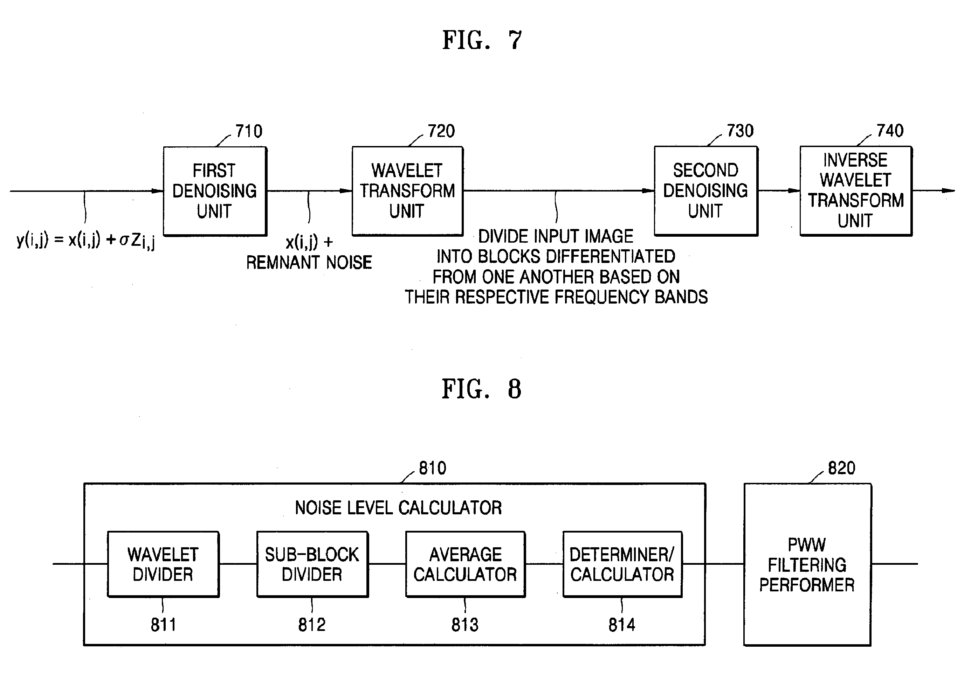

FIG. 7 is a block diagram of a denoising apparatus according to an exemplary embodiment of the present invention. Referring to FIG. 7, the denoising apparatus includes a first denoising unit 710, a wavelet transform unit 720, a second denoising unit 730, and an inverse wavelet transform unit 740. The first denoising unit 710 performs the primary denoising operations of the denoising method of FIG. 1 on an input image having noise components. The wavelet transform unit 720 performs wavelet transform. The second denoising unit 730 performs the secondary denoising operations of the denoising method of FIG. 1. The inverse wavelet transform method 740 performs inverse wavelet transform on the input image with the noise components removed.

FIG. 8 is a detailed block diagram of the first denoising unit 710. Referring to FIG. 8, the first denoising unit 710 includes a noise level calculator 810, which calculates the level of noise included in an input image, and a PWW filtering performer 820, which performs PWW filtering on the input image using the noise level calculated by the noise level calculator 810. The noise level calculator 810 includes a wavelet divider 811, a sub-block divider 812, an average calculator 813, and a determiner/calculator 814. The wavelet divider 811 divides the input image with a division level of 1 by performing wavelet transform on the input image. The sub-block divider 812 further divides blocks of the input image whose horizontal and vertical components are all high frequency components into sub-blocks of a predetermined size. For example, each of the sub-blocks may have an $8 \times 8$ or $16 \times 16$ size. The average calculator 813 calculates an average of wavelet coefficients of the sub-blocks. The determiner/calculator 814 determines some of the sub-blocks having a wavelet coefficient of about 0 to be sub-blocks where only noise exists and then calculates the noise level by calculating a square root of variances of the corresponding sub-blocks.

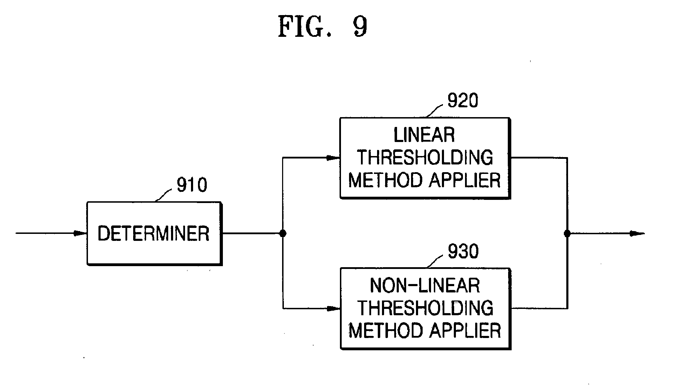

FIG. 9 is a detailed block diagram of the second denoising unit 739. Referring to FIG. 9, the second denoising unit 730 includes a determiner 910, a linear thresholding method applier 920, and a non-linear thresholding method applier 930.

The second denoising unit 730 denoises an input image by applying either the linear thresholding method or the non-linear thresholding method to blocks of the input image obtained by performing wavelet division on the input image. The determiner 910 determines whether to apply the non-linear thresholding method or the linear thresholding method to the blocks of the input image. The determiner 910 determines to apply the non-linear thresholding method to some of the blocks of the input image that are not larger than round(N/2) and to apply the linear thresholding method to the rest of the blocks of the input image. The linear thresholding method applier 920 denoises the input image by applying the linear thresholding method, and the non-linear thresholding method applier 930 denoises the input image by applying the non-linear thresholding method. The linear and non-linear thresholding method have already been described above, and thus their detailed descriptions will be omitted.

The present invention can be realized as a computer-readable code written on a computer-readable recording medium. The computer-readable recording medium includes nearly all kinds of recording devices, in which data is stored in such a manner that it can be read by a computer system. For example, the computer-readable recording medium includes a ROM, a RAM, a CD-ROM, a magnetic tape, a floppy disk, an optical data storage, and a carrier wave (e.g., data transmission through the Internet). The computer-readable recording medium can be distributed over a plurality of computer systems connected to a network so that data written thereon can be executed in a decentralized manner.

While the present invention has been particularly shown and described with reference to exemplary embodiments thereof, it will be understood by those of ordinary skill in the art that various changes in form and details may be made therein without departing from the present invention as defined by the following claims.

## Claims

1.  A denoising method comprising:

     (a) primarily denoising an input image through pixel-wise wiener filtering in a spatial domain (S110, S120);
     (b) dividing the input image into blocks by performing wavelet transform on the primarily denoised input image and then secondarily denoising the divided input image by applying different thresholds to the divided input image depending on the division level of the divided input image (S130, S140); and

     performing inverse wavelet transform (S150),
     wherein (b) comprises:

     (b1) dividing the primarily denoised input image with a division level of N by performing waveform transform; and
     (b2) secondarily denoising the divided input image by applying different thresholds to the divided input image depending on the division level of the divided input image,

     and wherein in (b2), if sub-blocks are not larger than round(N/2), and the absolute values of wavelet coefficients of sub-blocks are smaller than a reference value for a predetermined level, the wavelet coefficients of the sub-blocks are set to a value of 0, and if the sub-blocks are not larger than round(N/2), but the absolute values of the wavelet coefficients of the sub-blocks are not smaller than the reference value for the predetermined level, results of subtracting the reference value from the absolute values of the wavelet coefficients of the sub-blocks are output with signs of the wavelet coefficients of the sub-blocks kept intact,
     and wherein the reference value is calculated based on a median value, which is obtained by detecting a maximum among wavelet coefficients averages of only high-frequency blocks of the image in each of a plurality of rows of the image, which are high frequency components, and then averaging such maximums respectively detected from the plurality of rows of the image in consideration that the input image has already been primarily denoised through pixel-wise wiener filtering, by using the following equation:

$$t = \gamma \cdot \sigma \cdot \sqrt{2 \log n / n}$$

where $t$ denotes the reference point, n denotes a division level, $\sigma$ denotes a noise level, and $\gamma$ denotes the median value, and wherein:

(a) comprises (a1) calculating the level of noise included in the input image; and
(a1) comprises:

(a11) dividing the input image into blocks with a division level of 1 by performing wavelet transform;
(a12) dividing some of the blocks of the input image whose horizontal and vertical components are all high frequency components into sub-blocks;
(a13) calculating an average of wavelet coefficients of the sub-blocks; and
(a14) determining some of the sub-blocks having a wavelet coefficient of about 0 as sub-blocks where only noise exists and calculating the noise level by obtaining a square root of an average of variances of the corresponding sub-blocks where only noise exists.

2. The denoising method of claim 1, wherein (a) comprises

(a2) performing pixel-wise Wiener (PWW) filtering on the input image by using the noise level calculated in (a1).

3. The denoising method of claim 1 or 2, wherein each of the sub-blocks has an 8x8 size or a 16×16 size.

4. The denoising method of claim 1 or 2, wherein in (a2), a noise variance is calculated by using the noise level calculated in (a1), and a local mean and a local variance in an edge portion of each of the sub-blocks are calculated by horizontally and vertically mirroring the wavelet coefficients of each of the sub-blocks if no wavelet coefficients exist in the edge portion of each of the sub-blocks.

5. The denoising method of claim 1, wherein in (b2), if some of the sub-blocks which are larger than round(N/2), their wavelet coefficients are output.

6. A denoising apparatus comprising:

a first denoising unit (710), which primarily denoises an input image through pixel-wise wiener filtering in a spatial domain;
a wavelet transform unit (720), which divides the input image into blocks by performing wavelet transform on the primarily denoised input image;
a second denoising unit (730), which secondarily denoises the divided input image by applying different thresholds to the divided input image depending on the division level of the divided input image; and
an inverse wavelet transform unit, which performs inverse wavelet transform on the secondarily denoised input image,
wherein the dividing comprises dividing the primarily denoised input image with a division level of N by performing waveform transform; and wherein secondarily denoisining the divided input image comprises applying different thresholds to the divided input image depending on the division level of the divided input image
wherein if sub-blocks are not larger than round(N/2), and the absolute values of wavelet coefficients of sub-blocks are smaller than a reference value for a predetermined level, then the second denoising unit sets the wavelet coefficients of the sub-blocks, and if the sub-blocks are not larger than round(N/2), but the absolute values of the wavelet coefficients of the sub-blocks are not smaller than the reference value for the predetermined level, then the second denoising unit outputs results of subtracting the reference value from the absolute values of the wavelet coefficients of the sub-blocks with signs of the wavelet coefficients of the sub-blocks kept intact, wherein the reference value is calculated based on a median value, which is obtained by detecting a maximum among wavelet coefficients averages of only high-frequency blocks of the image in each of a plurality of rows of the image, which are high frequency components, and then averaging such maximums respectively detected from the plurality of rows of the image in consideration that the input image has already been primarily denoised through pixel-wise wiener filtering, by using the following equation:

$$t = \gamma \cdot \sigma \cdot \sqrt{2 \log n / n}$$

where $t$ denotes the reference point, n denotes a division level, $\sigma$ denotes a noise level, and $\gamma$ denotes the median value, wherein the first denoising unit comprises a noise level calculator, which calculates the level of noise included in the input image,
and wherein the noise level calculator comprises:

a wavelet divider, which divides the input image into blocks by performing wavelet transform on the input image with a division level of 1;
a sub-block divider, which divides some of the blocks of the input image whose horizontal and vertical components are all high frequency components into sub-blocks;
an average calculator, which calculates an average of wavelet coefficients of the sub-blocks; and
a determiner/calculator, which determines some of the sub-blocks having a wavelet coefficient of about 0 as sub-blocks where only noise exists and calculates the noise level by obtaining a square root of an average of variances of the corresponding sub-blocks where only noise exists.

7. The denoising apparatus of claim 6, wherein the first denoising unit comprises a PWW filtering performer, which performs pixel-wise Wiener (PWW) filtering on the input image by using the noise level calculated by the noise level calculator.

8. The denoising apparatus of claim 6 or 7, wherein the PWW filtering performer calculates a noise variance by using the noise level and calculates a local mean and a local variance in an edge portion of each of the sub-blocks by horizontally and vertically mirroring the wavelet coefficients of each of the sub-blocks if no wavelet coefficients exist in the edge portion of each of the sub-blocks.

9. The denoising apparatus of claim 6, wherein if some of the sub-blocks which are larger than round(N/2), the second denoising unit output their wavelet coefficients.

10. A computer-readable recording medium, on which a program enabling a denoising method as claimed in any of claim 1 to 5 is recorded.

**Patentansprüche**

1. Entrauschungsverfahren, welches umfasst:

(a) primäres Entrauschen eines Eingangsbildes durch pixelweise Wiener-Filterung in einem räumlichen Bereich (S110, S120);
(b) Aufteilen des Eingangsbildes in Blöcke durch Durchführung einer Wavelet-Transformation des primär entrauschten Eingangsbildes und anschließend sekundäres Entrauschen des aufgeteilten Eingangsbildes durch Anwenden verschiedener Schwellenwerte auf das aufgeteilte Eingangsbild in Abhängigkeit vom Aufteilungsniveau des aufgeteilten Eingangsbildes (S130, S140); und

Durchführen einer inversen Wavelet-Transformation (S150),
wobei (b) umfasst:

(b1) Aufteilen des primär entrauschten Eingangsbildes mit einem Aufteilungsniveau von N durch Durchführung einer Wavelet-Transformation; und
(b2) sekundäres Entrauschen des aufgeteilten Eingangsbildes durch Anwenden verschiedener Schwellenwerte auf das aufgeteilte Eingangsbild in Abhängigkeit vom Aufteilungsniveau des aufgeteilten Eingangsbildes, und wobei in (b2), falls Unterblöcke nicht größer als round(N/2) sind und die absoluten Beträge von Wavelet-Koeffizienten von Unterblöcken kleiner als ein Referenzwert für ein vorbestimmtes Niveau sind, die Wavelet-Koeffizienten der Unterblöcke auf einen Wert 0 gesetzt werden, und falls die Unterblöcke nicht größer als round(N/2) sind, jedoch die absoluten Beträge der Wavelet-Koeffizienten der Unterblöcke nicht kleiner als der Referenzwert für das vorbestimmte Niveau sind, Ergebnisse der Subtraktion des Referenzwertes von den absoluten Beträgen der Wavelet-Koeffizienten der Unterblöcke ausgegeben werden, wobei die Vorzeichen der Wavelet-Koeffizienten der Unterblöcke beibehalten werden,

und wobei der Referenzwert auf der Basis eines Medianwertes berechnet wird, welcher erhalten wird, indem ein Maximum unter Mittelwerten von Wavelet-Koeffizienten nur von Hochfrequenzblöcken des Bildes in jeder von mehreren Zeilen des Bildes, welche Hochfrequenzkomponenten sind, detektiert wird, und danach diese aus den mehreren Zeilen des Bildes jeweils detektierten Maxima unter Berücksichtigung dessen gemittelt werden, dass das Eingangsbild bereits durch pixelweise Wiener-Filterung primär entrauscht worden ist, unter Verwendung der folgenden Gleichung:

$$t = \gamma \cdot \sigma \cdot \sqrt{2 \log n / n}$$

wobei t den Referenzpunkt bezeichnet, n ein Aufteilungsniveau bezeichnet, $\sigma$ einen Rauschpegel bezeichnet und $\gamma$ den Medianwert bezeichnet, und wobei:

(a) umfasst: a(1) Berechnen des in dem Eingangsbild enthaltenen Rauschpegels; und
(a1) umfasst:

(a11) Aufteilen des Eingangsbildes in Blöcke mit einem Aufteilungsniveau von 1 durch Durchführung einer Wavelet-Transformation;
(a12) Aufteilen einiger der Blöcke des Eingangsbildes, deren horizontale und vertikale Komponenten alle Hochfrequenzkomponenten sind, in Unterblöcke;
(a13) Berechnen eines Mittelwertes von Wavelet-Koeffizienten der Unterblöcke; und
(a14) Bestimmen einiger der Unterblöcke, die einen Wavelet-Koeffizienten von ungefähr 0 haben, als Unterblöcke, in denen nur Rauschen vorhanden ist, und Berechnen des Rauschpegels durch Berechnen einer Quadratwurzel eines Mittelwertes von Varianzen der entsprechenden Unterblöcke, in denen nur Rauschen vorhanden ist.

2. Entrauschungsverfahren nach Anspruch 1, wobei (a) umfasst:

(a2) Durchführen einer pixelweisen Wiener (Pixel-Wise Wiener, PWW)-Filterung des Eingangsbildes unter Verwendung des in (a1) berechneten Rauschpegels.

3. Entrauschungsverfahren nach Anspruch 1 oder 2, wobei jeder der Unterblöcke eine Größe 8x8 oder eine Größe 16x16 hat.

4. Entrauschungsverfahren nach Anspruch 1 oder 2, wobei in (a2) eine Rauschvarianz unter Verwendung des in (a1) berechneten Rauschpegels berechnet wird und ein lokaler Mittelwert und eine lokale Varianz in einem Randabschnitt jedes der Unterblöcke durch horizontales und vertikales Spiegeln der Wavelet-Koeffizienten jedes der Unterblöcke berechnet werden, falls keine Wavelet-Koeffizienten in dem Randabschnitt jedes der Unterblöcke existieren.

5. Entrauschungsverfahren nach Anspruch 1, wobei in (b2), falls einige der Unterblöcke größer als round(N/2) sind, deren Wavelet-Koeffizienten ausgegeben werden.

6. Entrauschungsvorrichtung, welche umfasst:

eine erste Entrauschungseinheit (710), welche ein primäres Entrauschen eines Eingangsbildes durch pixelweise Wiener-Filterung in einem räumlichen Bereich durchführt;
eine Wavelet-Transformationseinheit (720), welche das Eingangsbild durch Durchführung einer Wavelet-Transformation des primär entrauschten Eingangsbildes in Blöcke aufteilt;
eine zweite Entrauschungseinheit (730), welche ein sekundäres Entrauschen des aufgeteilten Eingangsbildes durch Anwenden verschiedener Schwellenwerte auf das aufgeteilte Eingangsbild in Abhängigkeit vom Aufteilungsniveau des aufgeteilten Eingangsbildes durchführt; und
eine Einheit zur inversen Wavelet-Transformation, welche eine inverse Wavelet-Transformation des sekundär entrauschten Eingangsbildes durchführt,
wobei das Aufteilen das Aufteilen des primär entrauschten Eingangsbildes mit einem Aufteilungsniveau von N durch Durchführung einer Wavelet-Transformation umfasst; und

wobei das sekundäre Entrauschen des aufgeteilten Eingangsbildes das Anwenden verschiedener Schwellenwerte auf das aufgeteilte Eingangsbild in Abhängigkeit vom Aufteilungsniveau des aufgeteilten Eingangsbildes umfasst,

wobei, falls Unterblöcke nicht größer als round(N/2) sind und die absoluten Beträge von Wavelet-Koeffizienten von Unterblöcken kleiner als ein Referenzwert für ein vorbestimmtes Niveau sind, die zweite Entrauschungseinheit dann die Wavelet-Koeffizienten der Unterblöcke setzt, und falls die Unterblöcke nicht größer als round(N/2) sind, jedoch die absoluten Beträge der Wavelet-Koeffizienten der Unterblöcke nicht kleiner als der Referenzwert für das vorbestimmte Niveau sind, die zweite Entrauschungseinheit Ergebnisse der Subtraktion des Referenzwertes von den absoluten Beträgen der Wavelet-Koeffizienten der Unterblöcke ausgibt, wobei die Vorzeichen der Wavelet-Koeffizienten der Unterblöcke beibehalten werden,

wobei der Referenzwert auf der Basis eines Medianwertes berechnet wird, welcher erhalten wird, indem ein Maximum unter Mittelwerten von Wavelet-Koeffizienten nur von Hochfrequenzblöcken des Bildes in jeder von mehreren Zeilen des Bildes, welche Hochfrequenzkomponenten sind, detektiert wird, und danach diese aus den mehreren Zeilen des Bildes jeweils detektierten Maxima unter Berücksichtigung dessen gemittelt werden, dass das Eingangsbild bereits durch pixelweise Wiener-Filterung primär entrauscht worden ist, unter Verwendung der folgenden Gleichung:

$$t = \gamma \cdot \sigma \cdot \sqrt{2 \log n / n}$$

wobei t den Referenzpunkt bezeichnet, n ein Aufteilungsniveau bezeichnet, $\sigma$ einen Rauschpegel bezeichnet und $\gamma$ den Medianwert bezeichnet, wobei die erste Entrauschungseinheit einen Rauschpegelberechner umfasst, welcher den in dem Eingangsbild enthaltenen Rauschpegel berechnet,

und wobei der Rauschpegelberechner umfasst:

einen Wavelet-Aufteiler, welcher das Eingangsbild durch Durchführung einer Wavelet-Transformation des Eingangsbildes mit einem Aufteilungsniveau von 1 in Blöcke aufteilt;

einen Unterblock-Aufteiler, welcher einige der Blöcke des Eingangsbildes, deren horizontale und vertikale Komponenten alle Hochfrequenzkomponenten sind, in Unterblöcke aufteilt;

einen Mittelwertberechner, welcher einen Mittelwert von Wavelet-Koeffizienten der Unterblöcke berechnet; und

einen Bestimmer/Berechner, welcher einige der Unterblöcke, die einen Wavelet-Koeffizienten von ungefähr 0 haben, als Unterblöcke bestimmt, in denen nur Rauschen vorhanden ist, und den Rauschpegel durch Berechnen einer Quadratwurzel eines Mittelwertes von Varianzen der entsprechenden Unterblöcke, in denen nur Rauschen vorhanden ist, berechnet.

**7.** Entrauschungsvorrichtung nach Anspruch 6, wobei die erste Entrauschungseinheit einen PWW-Filterer umfasst, welcher eine pixelweise Wiener (Pixel-Wise Wiener, PWW)-Filterung des Eingangsbildes unter Verwendung des durch den Rauschpegelberechner berechneten Rauschpegels durchführt.

**8.** Entrauschungsvorrichtung nach Anspruch 6 oder 7, wobei der PWW-Filterer eine Rauschvarianz unter Verwendung des Rauschpegels berechnet und einen lokalen Mittelwert und eine lokale Varianz in einem Randabschnitt jedes der Unterblöcke durch horizontales und vertikales Spiegeln der Wavelet-Koeffizienten jedes der Unterblöcke berechnet, falls keine Wavelet-Koeffizienten in dem Randabschnitt jedes der Unterblöcke existieren.

**9.** Entrauschungsvorrichtung nach Anspruch 6, wobei, falls einige der Unterblöcke größer als round(N/2) sind, die zweite Entrauschungseinheit deren Wavelet-Koeffizienten ausgibt.

**10.** Computerlesbares Aufzeichnungsmedium, auf welchem ein Programm aufgezeichnet ist, das ein Entrauschungsverfahren nach einem der Ansprüche 1 bis 5 ermöglicht.

**Revendications**

**1.** Procédé de débruitage consistant à :

(a) débruiter primairement une image d'entrée par filtrage de Wiener en termes de pixels dans un domaine spatial (S110, S120) ;

(b) diviser l'image d'entrée en blocs en effectuant une transformée d'ondelettes sur l'image d'entrée débruitée primairement et débruiter secondairement l'image d'entrée divisée en appliquant des seuils différents à l'image d'entrée divisée en fonction du niveau de division de l'image d'entrée divisée (S130, S140) ; et

effectuer une transformée d'ondelettes inverse ;

dans lequel (b) consiste à :

(b1) diviser l'image d'entrée débruitée primairement par un niveau de division de N en effectuant une transformée d'ondelettes ; et

(b2) débruiter secondairement l'image d'entrée divisée en appliquant différents seuils à l'image d'entrée divisée en fonction du niveau de division de l'image d'entrée divisée ;

et dans lequel, en (b2), si les sous-blocs ne sont pas plus importants qu'un tour (N/2), et si les valeurs absolues des coefficients d'ondelettes des sous-blocs sont inférieures à une valeur de référence pour un niveau prédéterminé, les coefficients d'ondelettes des sous-blocs sont établis à une valeur de 0, et si les sous-blocs ne sont pas plus importants qu'un tour (N/2) mais que les valeurs absolues des coefficients d'ondelettes des sous-blocs ne sont pas inférieures à la valeur de référence pour le niveau prédéterminé, les résultats de la soustraction de la valeur de référence des valeurs absolues des coefficients d'ondelettes des sous-blocs sont émis avec les signes des coefficients d'ondelettes des sous-blocs restés intacts ;

et dans lequel la valeur de référence est calculée en fonction d'une valeur médiane qui est obtenue en détectant un maximum parmi des moyennes des coefficients d'ondelettes uniquement de blocs haute fréquence de l'image dans chacune de plusieurs rangées de l'image, qui sont des composantes haute fréquence, et en moyennant ces maximums respectivement détectés parmi les plusieurs rangées de l'image en considérant que l'image d'entrée a déjà été débruitée primairement par filtrage de Wiener en termes de pixels, ceci en utilisant l'équation suivante :

$$t = \gamma \cdot \sigma \cdot \sqrt{2\log n/n}$$

où t renvoie au point de référence, n indique un niveau de division, $\sigma$ indique un niveau de bruit, et $\gamma$ indique la valeur médiane ; et dans lequel :

(a) comprend (a1) qui consiste à calculer le niveau de bruit inclus dans l'image d'entrée ; et

(a1) consiste à :

(a11) diviser l'image d'entrée en blocs ayant un niveau de division de 1 en effectuant une transformée d'ondelette ;

(a12) diviser certains des blocs de l'image d'entrée dont les composantes horizontales et verticales sont toutes des composantes haute fréquence en sous-blocs ;

(a13) calculer une moyenne de coefficients d'ondelettes des sous-blocs ; et

(a14) déterminer certains des sous-blocs ayant un coefficient d'ondelette d'environ 0 comme étant des sous-blocs où seul du bruit existe, et calculer le niveau de bruit en obtenant une racine carrée de la moyenne des variances des sous-blocs correspondants où seul le bruit existe.

2. Procédé de débruitage selon la revendication 1, dans lequel (a) comprend (a2) qui consiste à effectuer un filtrage de Wiener en termes de pixels (PWW) sur l'image d'entrée en utilisant le niveau de bruit calculé en (a1).

3. Procédé de débruitage selon les revendications 1 ou 2, dans lequel chacun des sous-blocs possède une taille de 8x8 ou une taille de 16x16.

4. Procédé de débruitage selon les revendications 1 ou 2, dans lequel, en (a2), une variance de bruit est calculée en utilisant le niveau de bruit calculé en (a1), et une moyenne locale et une variance locale dans une partie marginale de chacun des sous-blocs sont calculées en appliquant un effet miroir horizontal et vertical des coefficients d'ondelettes de chacun des sous-blocs si aucun coefficient d'ondelette n'existe dans la partie marginale de chacun des sous-blocs.

**5.** Procédé de débruitage selon la revendication 1, dans lequel, en (b2), si certains des sous-blocs sont plus importants que le tour (N/2), leurs coefficients d'ondelettes sont émis.

**6.** Appareil de débruitage comprenant :

une première unité de débruitage (710) qui débruite primairement une image d'entrée par filtrage de Wiener en termes de pixels dans un domaine spatial ;
une unité de transformée d'ondelettes (720) qui divise l'image d'entrée en blocs en effectuant une transformée d'ondelettes sur l'image d'entrée débruitée primairement ;
une seconde unité de débruitage (730) qui débruite secondairement l'image d'entrée divisée en appliquant des seuils différents à l'image d'entrée divisée en fonction du niveau de division de l'image d'entrée divisée ; et
une unité de transformée d'ondelettes inverse qui effectue une transformée d'ondelettes inverse sur l'image d'entrée débruitée secondairement ;
dans lequel la division consiste à diviser l'image d'entrée débruitée primairement par un niveau de division de N en effectuant une transformée d'ondelettes ; et
dans lequel le débruitage secondaire de l'image d'entrée divisée consiste à appliquer différents seuils à l'image d'entrée divisée en fonction du niveau de division de l'image d'entrée divisée ;
dans lequel, si les sous-blocs ne sont pas plus importants qu'un tour (N/2), et si les valeurs absolues des coefficients d'ondelettes des sous-blocs sont inférieures à une valeur de référence pour un niveau prédéterminé, la seconde unité de débruitage définit les coefficients d'ondelettes des sous-blocs, et si les sous-blocs ne sont pas plus importants qu'un tour (N/2) mais que les valeurs absolues des coefficients d'ondelettes des sous-blocs ne sont pas inférieures à la valeur de référence pour le niveau prédéterminé, la seconde unité de débruitage émet les résultats de la soustraction de la valeur de référence des valeurs absolues des coefficients d'ondelettes des sous-blocs avec les signes des coefficients d'ondelettes des sous-blocs restés intacts ;
dans lequel la valeur de référence est calculée en fonction d'une valeur médiane qui est obtenue en détectant un maximum parmi des moyennes des coefficients d'ondelettes uniquement de blocs haute fréquence de l'image dans chacune de plusieurs rangées de l'image, qui sont des composantes haute fréquence, et en moyennant ces maximums respectivement détectés parmi les plusieurs rangées de l'image en considérant que l'image d'entrée a déjà été débruitée primairement par filtrage de Wiener en termes de pixels, ceci en utilisant l'équation suivante :

$$t = \gamma \cdot \sigma \cdot \sqrt{2\log n/n}$$

où t renvoie au point de référence, n indique un niveau de division, $\sigma$ indique un niveau de bruit, et $\gamma$ indique la valeur médiane, dans lequel la première unité de débruitage comprend un calculateur de niveau de bruit, qui calcule le niveau de bruit compris dans l'image d'entrée,
et dans lequel le calculateur de niveau de bruit comprend :

un diviseur d'ondelette qui divise l'image d'entrée en blocs en effectuant une transformée d'ondelettes sur l'image d'entrée avec un niveau de division de 1 ;
un diviseur de sous-blocs qui divise certains des blocs de l'image d'entrée dont les composantes horizontales et verticales sont toutes des composantes haute fréquence en sous-blocs ;
un calculateur de moyenne qui calcule une moyenne des coefficients d'ondelettes des sous-blocs ; et
- un déterminateur/calculateur qui détermine certains des sous-blocs ayant un coefficient d'ondelette d'environ 0 comme étant des sous-blocs où seul du bruit existe, et calcule le niveau de bruit en obtenant une racine carrée de la moyenne des variances des sous-blocs correspondants où seul le bruit existe.

**7.** Appareil de débruitage selon la revendication 6, dans lequel la première unité de débruitage comprend un exécuteur de filtrage PWW qui effectue un filtrage de Wiener en termes de pixels (PWW) sur l'image d'entrée en utilisant le niveau de bruit calculé par le calculateur de niveau de bruit.

**8.** Appareil de débruitage selon les revendications 6 ou 7, dans lequel l'exécuteur de filtrage PWW calcule une variance de bruit en utilisant le niveau de bruit, et calcule une moyenne locale et une variance locale dans une partie marginale de chacun des sous-blocs en appliquant un effet miroir horizontal et vertical des coefficients d'ondelettes de chacun des sous-blocs si aucun coefficient d'ondelette n'existe dans la partie marginale de chacun des sous-blocs.

9. Appareil de débruitage selon la revendication 6, dans lequel si certains des sous-blocs sont plus importants que le tour (N/2), la seconde unité de débruitage émet leurs coefficients d'ondelettes.

10. Support d'enregistrement lisible par ordinateur sur lequel est enregistré un programme permettant de réaliser un procédé de débruitage selon l'une quelconque des revendications 1 à 5.

# FIG. 1

START

$\downarrow$

PRIMARY DENOISING OPERATIONS $\{$

CALCULATE NOISE LEVEL — S110

$\downarrow$

PERFORM PWW FILTERING — S120

$\downarrow$

SECONDARY DENOISING OPERATIONS $\{$

DIVIDE INPUT IMAGE INTO BLOCKS BY PERFORMING WAVELET TRANSFORM — S130

$\downarrow$

DENOISE INPUT IMAGE BY USING LINEAR OR NON−LINEAR THRESHOLDING METHOD — S140

$\downarrow$

PERFORM INVERSE WAVELET TRANSFORM — S150

$\downarrow$

END

# FIG. 2

# FIG. 3

START

DIVIDE INPUT IMAGE INTO BLOCKS
WITH DIVISION LEVEL OF 1 BY
PERFORMING WAVELET TRANSFORM — S310

DIVIDE HH1 BLOCK INTO
SUB-BLOCKS — S320

CALCULATE AVERAGE OF WAVELET
COEFFICIENTS OF SUB-BLOCKS — S330

DETERMINE SUB-BLOCKS HAVING
WAVELET COEFFICIENT OF
ABOUT 0 AS BEING SUB-BLOCKS
WHERE ONLY NOISE EXISTS — S340

CALCULATE NOISE LEVEL BY
CALCULATING SQUARE ROOT OF
AVERAGE OF VARIANCES OF
SUB-BLOCKS DETERMINED
AS BEING SUB-BLOCKS
WHERE ONLY NOISE EXISTS — S350

END

# FIG. 4

# FIG. 5

# FIG. 6A

THRESHOLD
VALUE(+α)

⁻α

WAVELET COEFFICIENT

# FIG. 6B

THRESHOLD
VALUE(+α)

⁻α

WAVELET COEFFICIENT

## FIG. 7

First Denoising Unit (710) → Wavelet Transform Unit (720) → Second Denoising Unit (730) → Inverse Wavelet Transform Unit (740)

$$y(i,j) = x(i,j) + \sigma Z_{i,j}$$

$x(i,j) +$ REMNANT NOISE

DIVIDE INPUT IMAGE INTO BLOCKS DIFFERENTIATED FROM ONE ANOTHER BASED ON THEIR RESPECTIVE FREQUENCY BANDS

## FIG. 8

NOISE LEVEL CALCULATOR (810): WAVELET DIVIDER (811) → SUB-BLOCK DIVIDER (812) → AVERAGE CALCULATOR (813) → DETERMINER/ CALCULATOR (814) → PWW FILTERING PERFORMER (820)

EP 1 668 890 B1

FIG. 9

**EP 1 668 890 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIN E et al.** Adaptive wiener filtering of noisy images and image sequences. *PROCEEDINGS 2003 INTERNATIONAL CONFERENCE ON IMAGE PROCESSING,* 14 September 2003, vol. 3, 349-352

- Image de-noising by integer wavelet transforms and generalized cross validation. **JANSEN MAARTEN et al.** MEDICAL PHYSICS. AIP, 01 April 1999, vol. 26, 622-630